# EUROPEAN PATENT APPLICATION

(11) **EP 4 664 413 A1**
(43) Date of publication of application: **17.12.2025**
(21) Application number: 25182481.9
(22) Date of filing: 12.06.2025
(51) Int. Cl.: G06V 10/75, G06V 20/64, G06T 7/00, G06V 10/82

(54) **APPARATUS AND METHODS FOR DETERMINING CANDIDATE OBJECTS**

(30) Priority: 16.06.2024 US 202418744664
(71) Applicant: ArvinMeritor Technology, LLC, Troy, MI 48084 (US)
(72) Inventor: Pillai, Aravind, Troy, 48084 (US); Ghering, Joseph, Troy, 48084 (US); Shirk, Adriana, Troy, 48084 (US)
(74) Representative: Whitfield, Jack Stephen

(57) **Abstract**

Aspects of the present invention relate to a control system for determining one or more candidate objects, an electronic device, and a method for determining one or more candidate objects. The control system comprises one or more processors collectively configured to: receive one or more images of an object to be identified; compare the one or more images of the object to a plurality of reference images corresponding to a plurality of known objects, the plurality of reference images comprising images of each of the known objects at a plurality of conditions; determine, in dependence on a similarity between the object to be identified and at least one reference image of at least one known object, one or more candidate objects from the plurality of known objects as potential matches with the object to be identified; and output an indication of the one or more candidate objects.

## Description

### FIELD

This application claims the benefit of priority of U.S. Patent Application No. 18/744,664, filed on June 16, 2024. The present disclosure relates to apparatus and methods for determining candidate objects. Aspects of the invention relate to a control system for determining one or more candidate objects, an electronic device, and a method for determining one or more candidate objects.

### BACKGROUND

It is known to provide methods and means to identify objects using image recognition. For example, an image may be captured by a user using a camera, and then various image recognition techniques may be employed to identify similar objects to an object in the captured image. However, in some cases, the object to be identified may be similar in appearance to a range of known objects. This may be problematic where the user requires to identify an exact match for the object being imaged. One such example is where a user is aiming to identify a component of a vehicle to seek a replacement component. There may be a significant number of similar sized and shaped components and it may be difficult for the user to identify the correct component, while only the correct component will operate with the user's vehicle. This problem is further complicated when the component being image is worn, broken or dirty, as can be the case when a user seeks to replace such a component part.

The present invention aims to address one or more of the disadvantages associated with the prior art.

### SUMMARY

Aspects and embodiments of the invention provide a control system for determining one or more candidate objects, an electronic device, and a method for determining one or more candidate objects as claimed in the appended claims.

According to an aspect of the present invention, a control system for determining one or more candidate objects, the control system comprising one or more processors collectively configured to: receive one or more images of an object to be identified; compare the one or more images of the object to a plurality of reference images corresponding to a plurality of known objects, the plurality of reference images comprising images of each of the known objects at a plurality of conditions; determine, in dependence on a similarity between the object to be identified and at least one reference image of at least one known object, one or more candidate objects from the plurality of known objects as potential matches with the object to be identified; and output an indication of the one or more candidate objects.

The control system of the present invention can accurately determine candidate objects as potential matches to the object to be identified by comparing reference images of known objects with the images of the object to be identified, because the plurality of reference images include images of the known objects at different conditions. In some examples, the different conditions may include different extents of wear, different breakages or different cleanliness of the known object. Thus, even if the object to be identified is worn, damaged or unclean and thus does not appear the same as the same object in a new condition, a corresponding candidate object may still be identified.

In some examples, the one or more candidate objects may be determined as objects being potential matches with the object to be identified.

It will be appreciated that the one or more images may comprise 2-dimensional or 3-dimensional images. Similarly, the plurality of reference images may comprise 2-dimensional or 3-dimensional reference images.

According to an aspect of the present invention, there is provided a computer system for determining one or more candidate objects, the computer system comprising: means for receiving one or more images of an object to be identified; means for comparing the one or more images of the object to a plurality of reference images corresponding to a plurality of known objects, the plurality of reference images comprising images of each of the known objects at a plurality of conditions; means for determining, in dependence on a similarity between the object to be identified and at least one reference image of at least one known object, one or more candidate objects from the plurality of known objects as potentials matches with the object to be identified; and means for outputting an indication of the one or more candidate objects.

In some examples, the object to be identified is a component for a vehicle and the plurality of known objects include a plurality of components for the vehicle.

Vehicles may comprise a significant number of different components, and vehicle components of a particular type such as a brake pad may include many unique versions which may not all be interoperable with all vehicles. Similarly, components used in vehicles often experience large amounts of wear and/or breakage, which can make it difficult to determine the specific type of a component needed as a replacement. Thus, the object identification of the present invention is particularly useful in the example of vehicle components due to the accurate identification of objects. Further, objects can be identified in situ, meaning that removal of the object from the vehicle can be avoided.

In some examples, the one or more processors are collectively configured to determine a type of the object and filter the plurality of reference images according to the determined type of the object.

By determining the type of the object, the process of comparing the images of the object to the reference images and determining one or more candidate objects can be performed more efficiently.

In some examples, the plurality of reference images comprise a plurality of 3D models and/or a plurality of 2D slices corresponding to the plurality of known objects, and wherein the one or more processors are collectively configured to: obtain one or more of a 3D model of the object and a plurality of 2D slices of the object based on the received one or more images; and compare the 3D model and/or the plurality of 2D slices to the plurality of reference images.

By generating a model of the object and comparing it to a like model of the known objects, known objects can be more accurately determined as candidate objects through the comparison. Advantageously, a 3D model will capture detailed information of the object including volumetric information, by mapping an object in all dimensions and determining a size of the object at the same time. In some examples, the 3D model of the object may be determined using a lidar-scanning based technique. The 3D model may be obtained using a lidar-based smartphone in some examples. The reference 3D model may also advantageously show a known object having different conditions, and may include volumetric data of the known object.

In some examples, the one or more processors are collectively configured to determine a first known object as a candidate object based on a similarity of a condition of the object to be identified and a condition of the first known object shown in at least one reference image of the first known object.

The first known object can be determined as a candidate object with a high degree of confidence based on the similarity to the object to be identified. By comparing the object to be identified to a plurality of reference images of the same known object, the object can be mapped to a candidate object even when the appearance of the object differs to the appearance of the known object in certain conditions.

In some examples, the one or more processors are further configured to compare a condition of the object in the received images to one or more wear characteristics of the plurality of known objects in at least one reference image thereof, the one or more wear characteristics including one or more of a location of wear of the object, a direction of wear of the object, or a wear pattern.

The object can be more accurately identified based on knowledge of how the known objects are worn over time. The condition of the object may indicate wear of the object. In particular, it may be known that certain known objects tend to only wear down in a particular direction. Based on the condition of the object to be identified and this information, known objects can be determined as candidate objects or excluded from candidacy based on the condition of the object and the wear characteristics.

In some examples, the one or more processors are further collectively configured to compare a condition of the object in the received images to one or more breakage characteristics of the plurality of known objects in at least one reference image thereof, the breakage characteristics including one or more of a location of a breakage of the object, a direction of a breakage of the object, or a breakage pattern.

The object can be more accurately identified based on knowledge of how the known objects break. The condition of the object may indicate a breakage of the object. In particular, it may be known that certain known objects tend to more commonly break in a particular place on the known object. Based on the condition of the object to be identified and this information, known objects can be determined as candidate objects or excluded from candidacy based on the condition of the object and the breakage characteristics.

In some examples, the plurality of reference images comprises a first plurality of reference images corresponding to a first known object, the first plurality of reference images comprising images of the first known object with different wear and/or breakages.

The plurality of reference images for a single known object showing the known object at different conditions means that the control system can accurately determine candidate objects even when the object to be identified is worn or broken.

In some examples, the first plurality of reference images comprises images of the first known object showing the first known object having one or more of different thicknesses, different breakages or different missing parts.

In some examples, the received one or more images of the object comprise an image showing a condition of the object, wherein the condition of the object is indicative of one or more of: wear of the object and breakage of the object.

In some examples, the one or more processors are collectively configured to output a user interface element to guide a user to determine a size of the object to be identified; and to determine the one or more candidate objects further based on the size of the object.

In some examples, the one or more processors are collectively configured to determine a type of the object to be identified and to determine the size of the object based on a predetermined dimension associated with the object type.

For certain types of objects, there may exist a plurality of known objects which all have a similar appearance to the object to be identified but differ in size. By considering the size of the object to be identified, the candidate objects may be more accurately determined. Further, certain types of objects may be more easily or reliably identified when their size is measured in a particular dimension (e.g., width, height, thickness, radial width, outer edge, etc.) compared to another dimension. Thus, by determining the size of the object based on a predetermined dimension associated with the object type, the object can be more accurately identified.

In some examples, the one or more processors are collectively configured to identify an object characteristic in the received one or more images of the object, and to determine the one or more candidate objects based on the object characteristic; wherein the object characteristic comprises one or more of a brand identifier, a product identifier, a notch or a location of the object on a vehicle.

In some examples, the one or more processors are configured to compare the received one or more images of the object to the plurality of reference images and determine the one or more candidate objects using a machine learning algorithm; and wherein the machine learning algorithm comprises a convolutional neural network configured to process images and to learn common object features in the database.

In some examples, the machine learning algorithm is configured to adjust one or more weightings based on user feedback associated with the one or more candidate objects.

Advantageously, the use of the machine learning algorithm means that the control system improves at the determination of candidate objects over time based on feedback. In some examples, the machine learning algorithm may be trained based on a training data set.

In some examples, the indication of the one or more candidate objects comprises an identification of the one or more candidate objects and a confidence metric indicative of a confidence that the respective candidate object corresponds to the object to be identified.

The output of the confidence metric enables a user to easily determine how likely a candidate object is to be a match for the object to be identified.

According to another aspect of the present invention, there is provided an electronic device comprising the control system of any of the preceding statements and a camera configured to capture the one or more images of the object.

According to another aspect of the present invention, there is provided a server device comprising the control system of any of the preceding statements, wherein the server device is configured to receive the one or more images of the object from an electronic device and to transmit the indication of the one or more candidate objects to the electronic device.

According to another aspect of the present invention, there is provided a method for determining one or more candidate objects, the method comprising: receiving one or more images of an object to be identified; comparing the one or more images of the object to a plurality of reference images corresponding to a plurality of known objects, the plurality of reference images comprising images of each of the known objects at a plurality of conditions; determining, in dependence on a similarity between the object to be identified and at least one reference image of at least one known object, one or more candidate objects from the plurality of known objects as potential matches with the object to be identified; and outputting an indication of the one or more candidate objects.

According to another aspect of the present invention, there is provided a computer-readable recording medium storing instructions thereon, the instructions when executed causing a processor to: receive one or more images of an object to be identified; compare the one or more images of the object to a plurality of reference images corresponding to a plurality of known objects, the plurality of reference images comprising images of each of the known objects at a plurality of conditions; determine, in dependence on a similarity between the object to be identified and at least one reference image of at least one known object, one or more candidate objects from the plurality of known objects as potential matches with the object to be identified; and output an indication of the one or more candidate objects.

In some examples, the computer-readable recording medium is a non-transitory computer-readable recording medium.

Within the scope of this application, it is expressly intended that the various aspects, embodiments, examples and alternatives set out in the preceding paragraphs, in the claims and/or in the following description and drawings, and, in particular, the individual features thereof, may be taken independently or in any combination. All embodiments and/or features of any embodiment can be combined in any way and/or combination unless such features are incompatible. The applicant reserves the right to change any originally filed claim or file any new claim accordingly, including the right to amend any originally filed claim to depend from and/or incorporate any feature of any other claim, although not originally claimed in that manner.

Further benefits and advantages of the present invention will become apparent from the following detailed description of at least one exemplary embodiment for carrying out the present invention with reference to the accompanying drawings.

### BRIEF DESCRIPTION OF THE DRAWINGS

One or more embodiments of the invention will now be described, by way of example only, with reference to the accompanying drawings, in which:
Figure 1 is a block diagram of a system according to an embodiment of the present invention;
Figure 2 is a flowchart showing a method according to an embodiment of the present invention;
Figure 3 is a flowchart showing a method according to an embodiment of the present invention;
Figure 4 is a block diagram of a structure of a machine learning algorithm according to an embodiment of the present invention;
Figures 5A-5B show an example user interface according to an embodiment of the present invention;
Figures 5C-5H show models of an object according to an embodiment of the present invention; and
Figures 6A-6E show example user interfaces according to an embodiment of the present invention.

### DETAILED DESCRIPTION OF THE PRESENT EMBODIMENTS

The present disclosure relates to methods and means for comparing one or more images of an object to be identified (otherwise known as a target object) to reference images associated with a plurality of known objects using image processing techniques, and determining one or more candidate objects from the plurality of known objects as potential matches to the object to be identified. In some examples, the plurality of reference images includes images of the known objects having different amounts of wear or having breakages. Optionally, the plurality of reference images may comprise a plurality of reference 3D images or a plurality of reference 3D models. The reference 3D models may include 3D models with different levels of wears and different levels of breakages based on known object conditions. A plurality of images of the object to be identified may be used to generate a 3D model of the object which may be compared to one or more reference 3D models of known objects. For example, a user device may use a camera to perform a lidar-based scanning process to capture images to generate a 3D volumetric representation of the object. Similarly, the one or more images of the object to be identified may comprise a 3D image or model of the object to be identified, which may then be compared to one or more reference 3D models. Thus, the present disclosure provides means and methods which can accurately determine candidate objects corresponding to an object to be identified regardless of the condition the object is in, which is particularly beneficial in situations where the object to be identified is worn or damaged and thus does not appear the same as a new version of the same object. In some examples, machine learning algorithms may be employed to improve object identification over time, by learning patterns or characteristics of the objects, particularly in relation to wear and breakages. For example, the machine learning algorithm may be a convolutional neural network and may learn common wear characteristics (for example based on wear direction, wear location, or wear patterns) or breakage characteristics (for example based on common breakage locations, missing components, or breakage patterns) of known objects. The present disclosure also describes user interfaces which provide an effective means for a user to capture images of an object to be identified and through which candidate objects determined as potential matches for the object are presented to the user.

The present disclosure is described below with reference to the identification of objects and candidate objects using an example of the objects being components of a vehicle, but it should be understood that the disclosure is not limited thereto. Vehicle components are merely one suitable type of object which may be identified using the methods described herein.. In the example of the objects being vehicle components, the present invention is particularly beneficial as different vehicles may typically have many components of a similar appearance, with minor differences in size or shape, which may be configured such that only one component or a sub-set of components of a particular type will operate with a particular vehicle. Similarly, components used in a vehicle often experience a reasonable degree of wear and tear, to the extent that it can become difficult to determine what specific component is needed as a replacement. Thus, it is important to accurately identify the correct component when a component requires replacement.

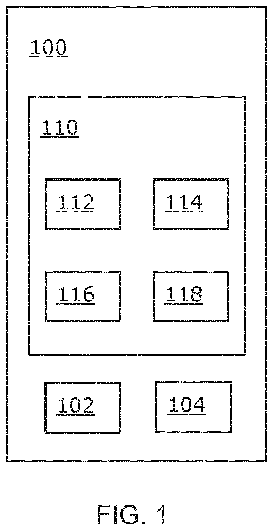

With reference to Figure 1, there is illustrated an electronic device 100 comprising a control system 110 for identifying one or more candidate objects as potential matches for an object. The electronic device 100 further comprises a camera unit 102 and a display 104. The control system 110 of Figure 1 comprises one or more processors 112, memory means 114, input means 116, and output means 118. It should be understood that the control system 110 may take a number of forms, and may include further components beyond those shown in Figure 1 or may omit components shown in Figure 1. The control system 110 of Figure 1 may be included in one or more electronic device 100, such as a mobile phone, a computer, or a server device.

The camera unit 102 is configured to capture images and may take any suitable form of imaging device. For example, the electronic device 100 may be a smartphone and the camera unit 102 may a camera of the smartphone, although it should be understood the present invention is not limited thereto and the camera unit 102 may comprise any suitable imaging apparatus. In some examples, the camera unit 102 may be configured to perform a scanning operation to scan the target object to generate a 3D model of the target object. For example, the camera unit 102 may comprise lidar based scanning means.

The display 104 is configured to output graphical and/or audio information under the control of the control system 110. For example, the display 104 may display one or more user interfaces under the control of the control system 110.

The control system 110 is configured to receive one or more images of an object to be identified. In one example, the one or more images of the object are received by the input means 116 from an external device. In another example, the one or more images of the object to be identified are received by the input means 116 from the camera unit 102 of the same device 100. The one or more images may be of any suitable image type. For example, the images may comprise 2-dimensional images or 3-dimensional images of the object to be identified. The control system 110 may receive one or more images and generate a 3D model of the object based on the received one or more images. Alternatively, the control system 110 may receive a 3D image or model of the object to be identified. The object may be any object, but in some examples may be a component of a vehicle. The one or more images of the object to be identified may show various representations of the object, including showing different sides of the object. The images of the object may include an image showing a condition of the object to be identified, such that a 3D model of the object generated based on the images shows the condition of the object. The condition of the object may represent wear or breakage over the use of the object, such as a part of the object being worn or broken. The wear or breakage of the object may otherwise be known as a wear condition or a breakage condition respectively.

It should be understood that throughout this disclosure, where reference is made to images of the object or to reference images of known objects, in some examples the images and reference images may comprise a plurality of images, one or more 3D models, or a plurality of 2D slices of the respective object. The 3D model may be a model of the object which includes images of the object surface and volumetric data. In some examples, both images and 3D models may be used. In one example, image recognition may be used initially to identify a subcategory of objects to compare with before deploying a 3D scan comparison to narrow the search to the subcategory of objects in question. For example, an image recognition may be used to identify that an object is a brake pad and not a U joint and then candidate objects may be determined based on a 3D model comparison with a smaller set of reference 3D models (in this example, models of brake pads only) to identify one or more candidate objects corresponding to the scanned or imaged brake pad type. A 3D model in some examples may be captured using lidar-based scanning techniques, such as by using a lidar-based smartphone, and may capture size information of the object during the scanning.

The control system 110 may be configured to control the display 104 and the camera unit 102 to guide a user to capture images of the object. For example, the control system 110 may control the display 104 to display a user interface including user interface elements providing instruction to the user to capture images of the object. The instructions in some examples may be instructions to capture images of one or more particular sides or features of the object. In another example, the display 104 may output a user interface to guide a user to use the camera unit 102 to obtain a 2D measurement of the object.

In one example, the control system 110 is configured to obtain one or more 3D models of the object to be identified or a plurality of 2D slices of the object to be identified based on the received one or more images of the object. For example, the one or more images of the object may comprise a plurality of images of the object which together show the object from a variety of angles. The control system 110 may combine the images of the object to obtain a 3D model of the object. Alternatively or in addition, the images of the object may be combined and divided into a model of 2D slices of the object.

In one example, the control system 110, and more particularly the one or more processors 112, may compare the received one or more images of the object to be identified to a plurality of reference images of a plurality of known objects. The plurality of reference images may be stored in the memory means 114. As has been discussed, in some examples the processor 112 may compare a 3D model of the object to be identified to one or more reference 3D models of known objects. In another example, the plurality of reference images or reference 3D models may be stored externally to the electronic device 100, such as on a server device communicatively coupled to the electronic device 100. The plurality of reference images may comprise 3D models or a plurality of 2D slices of the known objects. The plurality of reference images may comprise a plurality of images of each of the known objects, showing the respective known object having a plurality of wear or breakage conditions. In another example, the plurality of reference images comprises a plurality of reference 3D models showing the respective known object having the plurality of wear or breakage conditions. In this respect, for each known object, the reference images may comprise at least one set of reference images showing the known object in a brand-new condition with no wear or breakage, and one or more further sets of reference images showing the known object with different levels of wear or breakage. Optionally, the reference images of a known object may show typical wear of breakage often observed in the known object. For example, the plurality of reference images may include a plurality of reference images of a brake pad. The plurality of reference images of the brake pad may include images showing the brake pad having different levels of wear corresponding to levels of use (e.g., starting from brand new), in which the brake pad may have different thicknesses. In another example, the plurality of reference images of the brake pad may include images showing the brake pad with wear being uneven or with wear tapering across the brake pad. As another example, the plurality of reference images may comprise a plurality of reference images of a universal joint, which may include a first set of images of the universal joint in a new condition with all 4 legs of a trunnion of the universal joint intact, a second set of image of the universal joint having 3 legs of the trunnions intact and one leg broken apart, a third set of image of the universal joint having all 4 legs of the trunnion intact but one of the bearing caps broken, and/or one or more further sets of images showing the universal joint having any other level of wear or breakage. plurality of reference images may be stored in the form of a database. The plurality of reference images or reference 3D models may be based on manufacturer knowledge of potential wear or breakage conditions (and optionally a likelihood of each condition).

To compare the one or more images of the target object to the plurality of reference images, the one or more processors 112 may compare a condition of the object in the one or more images (or the 3D model) to a condition of a known object in the plurality of reference images (or 3D models). For example, the one or more processors 112 may be configured to compare the one or more images of the object to one or more reference images of said known object, and through the comparison may identify that a part of the object to be identified has a particular form of wear or breakage which is associated with a known object. The one or more processors 112 may determine that the target object is similar in appearance and characteristics to at least one reference image of the known object. For example, the target object may be a brake pad and may be worn in a first direction through use. The plurality of reference images may include a plurality of images of at least one known brake pad showing different amounts of wear in the first direction. The one or more processors 112 may determine the known brake pad as a candidate object based on at least one reference image of the known brake pad having a similar shape and wear characteristics as the brake pad being imaged. It should be understood that this is merely an example provided to illustrate the invention.

The one or more processors 112 in some examples may further be configured to identify a type of the object in the one or more images. For example, the one or more processors 112 may be configured to perform image analysis to identify a general type of the object. The type of the object in some examples may be a type of vehicle component, such as a brake pad, a joint, a bearing, a plug, or any other suitable type of object. The one or more processors 112 may then filter the plurality of reference images (or reference 3D models) by the identified type of the object before performing the comparison to reduce a processing requirement of the process. The one or more processors 112 may also determine object characteristics associated with the type of the object and may use the determined object characteristics when determining one or more candidate objects as is discussed in more detail below. For example, it may be known that a known type of brake pad has one or more grooves on its surface. The one or more processors 112 may identify similar grooves in the object being imaged and determine that the object being imaged corresponds more closely to the imaged brake pad than another type of brake pad omitting the grooves. The efficiency of the process may be improved by performing the comparison of the images or the 3D model of the object to be identified with a smaller subset of reference images or reference 3D models. In one example, image recognition may be used initially to identify a subcategory of objects to compare with before deploying a 3D scan comparison to narrow the search to the subcategory of objects in question. For example, an image recognition may be used to identify that an object is a brake pad and not a U joint and then candidate objects may be determined based on a 3D model comparison with a smaller set of reference 3D models (in this example, models of brake pads only) to identify one or more candidate objects corresponding to the scanned or imaged brake pad.

The one or more processors 112 are further configured to determine, in dependence on the comparison of the one or more images (or 3D model) of the object to be identified and the plurality of reference images (or reference 3D models), one or more candidate objects from the plurality of known objects as potential matches with the object to be identified. For example, the one or more processors 112 may determine a degree of similarity of the object in the one or more received images and the known objects, by comparison the one or more received images with the plurality of reference images (or reference 3D models). The degree of similarity of the object and the known objects may be quantified by a confidence metric, determined based on image processing and/or machine learning, which is discussed in greater detail below. The one or more candidate objects may be determined as known objects which have a similarity exceeding a threshold similarity.

In an example, the one or more processors 112 may be further configured to compare the images of the object to be identified with the plurality of reference images (or reference 3D models) based on one or more wear characteristic or breakage characteristic of the plurality of known objects. The wear characteristic may comprise a location of wear of the object, a direction of wear of the object, or a wear pattern. The breakage characteristic may comprise a location of a breakage of the object, a direction of a breakage of the object, or a breakage pattern. For example, the control system 110 may store information relating to particular types of wear or breakage associated with the known objects. The wear characteristics and breakage characteristics may be predetermined based on manufacturer knowledge of the known objects, or may be identified over time by a machine learning algorithm based on analysis of worn or broken instances of the known objects. The wear characteristics or breakage characteristics may be factored in to the comparison of the images of the object to the plurality of reference images to account for wear or breakages of the object to be identified causing the object to have a different appearance to a new version of the same object. In an example, the object to be identified is a brake pad, and is imaged or scanned having a degree of wear. In this example, the plurality of reference images (or reference 3D models) may include images corresponding to a plurality of different known brake pads, and may include images showing the known brake pads having different levels of wear. One or more candidate objects potentially matching the object to be identified may be determined based on the comparison of the images of the object and the reference images alone, or may be determined based on stored wear or breakage characteristics indicating that a particular known brake pad is associated with wear occurring in a particular direction that corresponds to wear of the object to be identified. It should be understood that this is merely an example provided for illustration, and that the disclosure is not limited thereto.

In an example, the one or more processors 112 may further be configured to perform the comparison and determine the one or more candidate objects based on a size of the object to be identified. The size of the object may be determined in a number of suitable ways. In one example, a user interface may be provided through the display 104 prompting the user to enter the size of the object. In another example, the size of the object may be measured using the camera unit 102. In another example, when Lidar based scanning is used to obtain images or a 3D model of the object to be identified, volumetric data of the object is captured. The determined size of the object may be used to filter the plurality of reference images prior to or after performing the comparison to reduce the number of candidate objects or to improve confidence that one or more candidate objects match the object to be identified. For example, the object may be a universal joint of a vehicle, and the plurality of reference images may include images of several known universal joints which have highly similar appearances but which differ in size. The size of the object to be identified can then be used to determine which of the known universal joints corresponds to the object to be identified. In some examples, a plurality of means to determine object size can be used in combination to increase the confidence in identifying one or more candidate objects.

In an example, when determining the size of the object, the control system 110 may first determine the type of the object (based on image analysis, as discussed above), and may then determine the size of the object in a predetermined dimension associated with the type of the object. For example, when determining candidate objects for a brake pad, it may be known that the width of the brake pad is more important for the determination that a thickness of the brake pad. Alternatively, when identifying a universal joint, the width from end to end may be more important than the outer diameter of the bearing cap. It should be understood that these are merely examples. In one example, a machine learning algorithm may determine the dimensions to be measured for different object types based on learning oh hierarchical features from a data set.

In another example, the control system 110 may control the camera unit 102 and/or the display 104 to obtain images or a 3D model showing one or more object characteristics (or object features) of the object to be identified. The object characteristics may include physical features such as grooves, notches or caps, or may include identifying features such as serial numbers, brand markings, product names, or the like, or may further include a location of the object on a vehicle or in another context.

The control system 110 is further configured to output an indication of the one or more candidate objects. The indication may be output through the output means 118. In one example, the indication may be output as a user interface or user interface element, and may include an identification of the one or more candidate objects. For example, the indication may be a user interface element which displays an image and/or a name of the one or more candidate objects. In one example, the indication may also include a confidence metric indicative of the confidence level of the determination of the one or more candidate objects (e.g., the indication may be a user interface element which includes a confidence level or probability that each of the one or more candidate objects corresponds to the object to be identified, in addition to an identification of the one or more candidate objects). In another example, the indication may be output by the output means 118 in the form of a control signal to another device to control the other device to output a graphical or audio indication of the one or more candidate objects. In an example, when a plurality of candidate objects are determined, the plurality of candidate objects may be presented in a ranked list of candidate objects based on the probability that the respective candidate objects correspond to the object being imaged.

The control system 110 as illustrated in Figure 1 comprises a processor 112 and a memory 114. The processor 112 may be one or more electronic processing devices 112 which operably executes computer-readable instructions. The memory 114 may be one or more memory device 114. The memory 114 is electrically coupled to the processor 112. The memory 114 is configured to store instructions, and the processor 112 is configured to access the memory 114 and execute the instructions stored thereon.

The control system 110 comprises the input means 116 and the output means 118. The input means 116 may comprise an electrical input of the control system 110. The output means 118 may comprise an electrical output of the control system 110. The input means 116 is arranged to receive the one or more images (or a 3D model) of the object to be identified from a camera unit or from an external device. The output means 118 is arranged to output an indication of the one or more candidate objects.

Although the description of Figure 1 refers to an electronic device 100 comprising the control unit 110, the camera unit 102, the memory means 114, and the display 104, it should be understood that the features described above in respect of Figure 1 may be implemented in more than one device. For example, while an electronic device 100 such as a smartphone may be provided to implement all of the features discussed above, in another example the electronic device 100 may communicate with one or more external devices and the one or more external devices may perform features described above in place of or in addition to the electronic device 100. For example, the electronic device 100 may be communicatively coupled to a server device and may transmit the one or more images of the object to be identified to the server device. The server device may store the plurality of reference images and may perform the comparison and determination of candidate objects, and may transmit an indication of the candidate objects to the electronic device 100 for display. As explained above, the indication of the candidate objects may comprise any suitable information to represent each of the one or more candidate objects (such as a name, image, product identifier, or the like) and may further comprise a confidence metric or probability score that the respective candidate object corresponds to the object to be identified. It should be understood that this is merely an example, and the present invention may be implemented in devices other than those provided as examples.

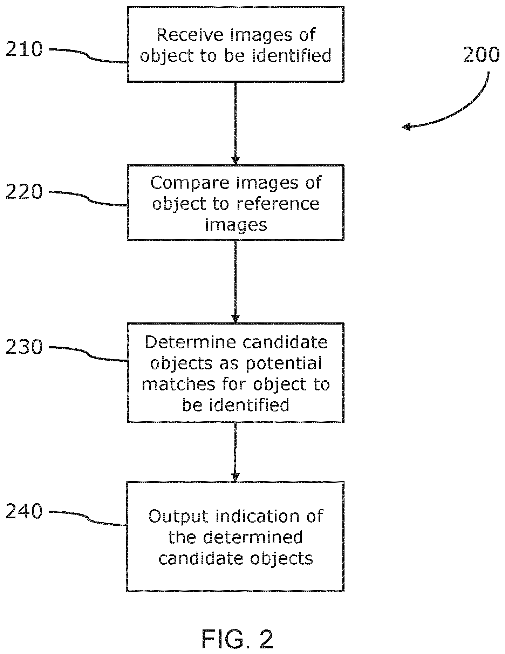

Figure 2 illustrates a method 200 according to an embodiment of the invention. The method 200 is a method of determining one or more candidate objects as potential matches for an object to be identified. The method 200 may be performed by the control system 110 illustrated in Figure 1. In particular, the memory 114 may comprise computer-readable instructions which, when executed by the processor 112, perform the method 200 according to an embodiment of the invention.

The method 200 of Figure 2 comprises receiving 210 one or more images of an object to be identified. As discussed with respect to Figure 1, the one or more images of the object may be received from an external device or may be captured with a camera unit. The one or more images of the object may comprise a 3D image or model of the object, or a 3D model may be generated based on the one or more images.

The one or more images of the object may show a condition of the object such as wear or breakage. The one or more images of the object may show the object from different angles or vantages. The one or more images of the object in some examples may be combined to form a 3D model of the object, or may be combined to obtain a model of the object comprising a plurality of 2D slices of the object. In one example, the 3D model may be obtained via a scanning application. When the scanning application is used, the device may be moved in multiple angles around the object to complete the scan and once done may capture volumetric information about the object. In this case, multiple images from different angles around the object may not be required.

The method 200 may further comprise outputting one or more user interface or user interface element to guide or instruct a user to obtain the images of the device. For example, a user may be instructed to capture images or a 3D model of the object to show different parts of the object or to show the object from different angles. The user interface may further be controlled to receive user input of object size or to perform an object measurement process using the camera of the device. The object measurement process may be a process to obtain a size of the object to be identified, which as discussed above, may be used to increase a confidence when identifying one or more candidate objects.

The method 200 further comprises comparing 220 the images of the object to a plurality of reference images corresponding to a plurality of known objects. The plurality of reference images may comprise multiple images of each of the known objects having a plurality of conditions, such as a varying amount of wear or different breakages. The plurality of reference images may also be in the form of a 3D model or a plurality of 2D slices to represent the known objects.

In some examples, the comparison 220 includes determining a degree of similarity between the object and the known objects based on the received images or 3D model and the reference images or 3D model. The degree of similarity may be determined based on image analysis or 3D model analysis techniques. In some examples, further information may be used for the comparison. As discussed above in respect of Figure 1, the comparison may further be based on one or more of a type of the object, a condition of the object, a wear characteristic or breakage characteristic of a known object, a size of the object to be identified, or an object characteristic of the object to be identified. One or more of these factors may be used to filter the plurality of known images prior to performing a comparison, or may be used to improve a confidence that a candidate object corresponds to the object to be identified.

Although not shown in Figure 2, the method 200 may further comprise determining one or more of a type of the object, a condition of the object, a size of the object to be identified, or an object characteristic of the object to be identified. The type of the object may be determined based on image analysis and information about known types of object being stored with the plurality of reference images. The condition of the object may be determined based on image analysis of the images of the object and one or more known wear or breakage characteristics. The size of the object may be determined based on a user input of the size or through a camera-based measurement process. The object characteristic of the object to be identified may be determined based on feature recognition or other image processing techniques, and may include features of the object such as notches, grooves, product or brand identifiers, or location of the object in or on a vehicle or in another context. In one example, image recognition may be used initially to identify a subcategory of objects to compare with before deploying a 3D scan comparison to narrow the search to the subcategory of objects in question. For example, an image recognition may be used to identify that an object is a brake pad and not a U joint and then candidate objects may be determined based on a 3D model comparison with a smaller set of reference 3D models (in this example, models of brake pads only) to identify one or more candidate objects corresponding to the scanned or imaged brake pad.

The method 200 comprises determining 230 one or more candidate objects from the plurality of known objects, the one or more candidate objects being determined as objects potentially matching the object to be identified. One or more known objects may be determined as candidate objects based on the comparison 220. For example, the method 200 may include determining a similarity score or confidence metric when performing the comparison 220, indicative of how similar a known object is to the object to be identified. The one or more candidate objects may be determined based on the similarity score exceeding a predetermined threshold. Known objects with a confidence metric below the predetermined threshold may be excluded from being determined as candidate objects. In some examples, the one or more candidate objects may further be determined by excluding or including known objects from candidacy based on one or more of the type of the object, the condition of the object, the wear characteristic or breakage characteristic of the known object, the size of the object to be identified, or an object characteristic of the object.

The method 200 of Figure 2 further comprises outputting 240 an indication of the determined one or more candidate objects. The indication of the one or more candidate objects includes an identifier of the one or more candidate objects. The indication may further comprise other information, including a confidence metric or a similarity score for each of the candidate objects indicating a confidence that the respective candidate object corresponds to the object to be identified. The indication may also include means for a user to purchase the candidate object. The indication may be output through a user interface.

The method 200 of Figure 2 may comprise further method steps not shown in Figure 2. In some examples, the method 200 of Figure 2 may be performed at least in part using a machine learning algorithm or artificial intelligence, such as a convolutional neural network. The machine learning algorithm may improve the comparison and determination of candidate objects of the method 300 over time by learning common features of objects, learning wear or breakage characteristics, or based on user feedback. For example, the machine learning algorithm may learn that a particular known object commonly wears in a manner which is not reflected in the plurality of reference images for that known object. The machine learning algorithm may then define a new wear characteristic corresponding to the common wear pattern, which may then be used in future determinations of candidate objects.

The method 200 may also include receiving feedback from a user regarding the one or more candidate objects. For example, the user may be presented with a prompt which requests they confirm whether or not one of the candidate objects matches with the object to be identified. Alternatively, user feedback may be inferred through monitoring whether the user purchases one or more of the candidate objects, or exits the application. The machine learning algorithm may process the user feedback and adjust weightings used in the comparison and determination steps to improve the method 200 for future determinations.

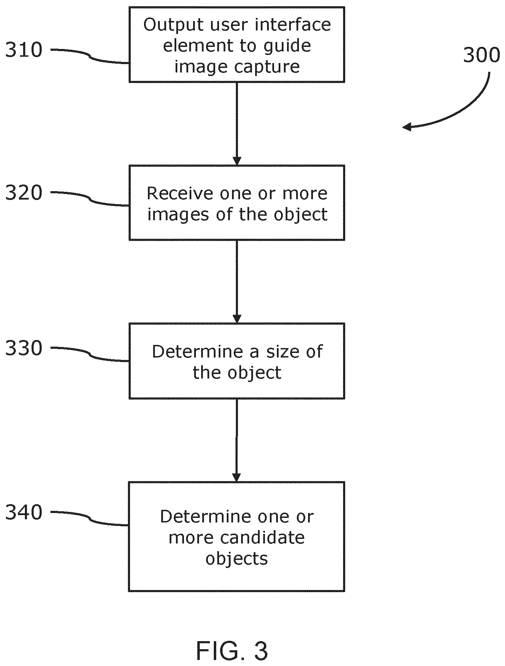

Figure 3 illustrates a method 300 according to an embodiment of the present invention. The method 300 of Figure 3 may be performed in combination with the method 200 of Figure 2, and particularly may be performed anywhere in the method 200 of Figure 2. The method 300 of Figure 3 may be performed by the control system 110 or the electronic device 100 of Figure 1. The method 300 of Figure 3 is a method for obtaining a size of the object to be identified by providing a user interface to guide a user to obtain the size of the object using a camera.

The method 300 of Figure 3 comprises outputting 310 a user interface element to guide the user to capture one or more images of the object. The user interface element may be output 310 before or after reception of the one or more images of the object to be identified in the method 200 of Figure 2. In one example, the user interface element is always output 310 such that the user is always prompted to measure the size of the object. In another examples, the user interface element is output after the reception of the images of the object to be identified. In this latter example, the method 300 of Figure 3 may be performed in particular circumstances, such as when too few or too many candidate objects are determined during the method 200 of Figure 2 or when a confidence metric of the determined candidate objects is below a certain threshold.

The user interface element which is output 310 in some examples includes an image of a field of view of the camera (i.e., a live-feed of the potential image to be taken). The user interface element may further comprise one or more instruction to the user directing the user to capture an image of a specific part of the object or to move the camera device in a particular way before capturing an image. In another example, the user interface element may further comprise an overlay indicating that the user is to move the camera in a particular direction in order to measure the size of the object.

In some examples, the size of the object may be determined based on one or more predetermined dimensions associated with a type of the object. The method 300 may include identifying a type of the object and then identifying one or more predetermined dimensions based on the type of the object. For example, if the object is determined to be a brake pad, the size of the object may be determined based on a width of the brake pad, a size of the outer edge of the brake pad, a size of the inner edge of the brake pad, the radial depth of the brake pad, the thickness of the brake pad, or other potential measures. One or more of these dimensions may be selected as predetermined dimensions for measurement if the object is a brake pad. The user interface element may then output indicators to guide the user to determine a size of the predetermined dimension associated with the object.

The method 300 of Figure 3 comprises receiving 320 one or more images of the object to be identified. The one or more images received may be captured using the camera in response to the output 310 of the user interface element, or may be received from an external device.

The method 300 of Figure 3 comprises determining 330 a size of the object to be identified based on the received 320 images. The size of the object may be determined based on image analysis techniques which would be known to the person skilled in the art. In one example discussed above, the method includes obtaining a 3D model of the object. The 3D model of the object comprises volumetric information of the object indicative of a size of the object, and thus the size of the object may not need to be separately determined. Other means for determining the size of the object may still be used in combination with the 3D model to increase a confidence when determining one or more candidate objects.

In another example, the method 300 of Figure 3 may omit the reception 320 of the images of the object, and may instead determine the size of the object based on a user input of the size of the object. For example, the user interface element may include a drop down menu including size options for the object (optionally based on the object type), or may include user interface elements for the user to input measurements obtained by other means. The user may still be provided with instructions to measure the correct dimension of the object, for example through the display of text and/or images explaining which dimension of the object to measure.

The method 300 of Figure 3 comprises determining 340 one or more candidate objects based on the size of the object. The one or more candidate objects may be determined 340 as explained above in respect of Figures 1 and 2, and further based on the size of the object. The size of the object may be used to determine that the object to be identified has a greater or lesser similarity to one or more of the known objects. For example, a plurality of known objects may have a similar appearance to the object to be identified, but may differ in size. The size of the object to be identified may be used to select one or more of these known objects as candidate objects which are more likely to be a match for the object to be identified.

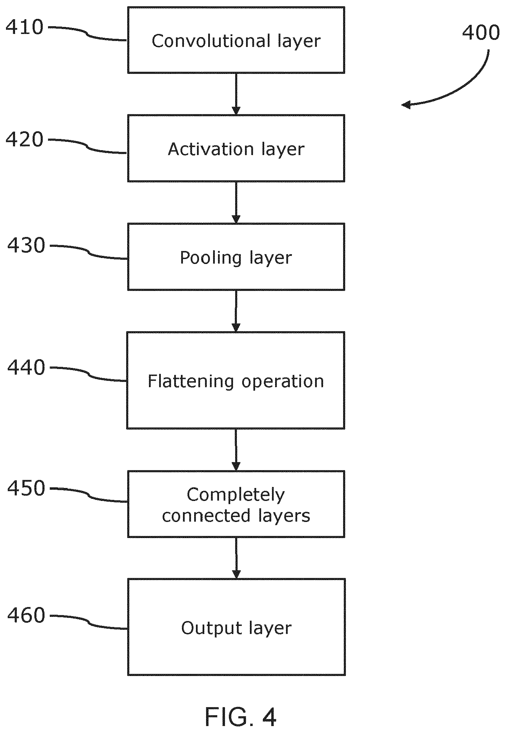

Figure 4 illustrates a structure of a machine learning algorithm 400 according to an embodiment of the present invention. The machine learning algorithm 400 of Figure 4 is represented as a series of layers which connect to one another. It should be understood that this is merely a representation to aid understanding, and that the machine learning algorithm 400 may take a number of suitable forms.

The machine learning algorithm 400 comprises a convolutional layer 410, an activation layer 420, one or more pooling layers 430, a flattening operation layer 440, one or more completely connected layers 450, and an output layer 450. It should be understood that this is merely exemplary, and one or more further layers may be included or one or more illustrated layers may be omitted.

The machine learning algorithm 400 may be a convolutional neural network configured to process the one or more received images of the object to be identified. In an example, the machine learning algorithm 400 may be configured to process a 3D model generated based on the one or more received images. The 3D model may generate a volumetric representation of the object to be identified. This representation could be in 3D Voxel grids or it could be in a set of 2D slices of the imaged object. Each discrete 3D voxel may contain information about the spatial structure of the object to be identified. The machine learning algorithm 400 is configured to identify the object by learning hierarchical features from the input images, and comparing the object to be identified to a plurality of known objects using the plurality of reference images of the known objects.

The convolutional layer 410 comprises one or more filters that process (or slide) the input of the 3D voxel grid or the 2D slices of the object. The filters may capture one or more of edges, local topography, patterns and/or textures of the imaged or scanned object.

The activation layer 420 is applied to output of the convolutional layer to introduce non-linearity to the machine learning algorithm 400. This non-linearity helps the machine learning algorithm 400 to learn and accurately represent complex patterns in the information stored in all 3D voxel grids for different types of objects. This layer acts on the entire volume of input, results in a feature map and enables the machine learning algorithm 400 to learn about the 3D features in an effective manner.

The one or more pooling layers 430 are used to improve speed of computation by reducing the number of spatial dimensions by pooling. The pooling may include keeping the important features while discarding the features that do not impact the object identification process for that specific object or object type. For example, in an example where the object is a brake pad, the brake pad width is a dominant feature and has a higher bearing on the identification of the brake pad while the pad thickness is significantly less important in its identification or categorization.

The flattening operation layer 440 may convert the output of the pooling layers 430 into a vector format.

The one or more completely connected layers 450 comprise dense layers including all the flattened feature vectors, which can be processed to learn patterns and relationships in the global data set.

The output layer 450 creates an output of probabilities of the 3D voxel grid of a known object being the object to be identified. Based on this output of probabilities for different known objects, one or more candidate objects can be identified which have a high probability of matching the object being imaged. As the machine learning algorithm 400 processes further image sets of different objects, and optionally receives feedback via user input or otherwise as discussed above, the machine learning algorithm 400 tweaks the weightage or parameters to optimize its ability to effectively and accurately classify the object and determine similarity to known objects. In this manner machine learning algorithm 400 more effectively determines one or more candidate objects for the object to be identified over time.

As the potential number of different objects to be identified is significant, the machine learning algorithm and more specifically a CNN may be deployed to analyze the data from the scanned 3D models, identify patterns, categorize parts and finally make prediction of the probability of the scanned models being a known object.

In one example use of the machine learning algorithm 400, the machine learning algorithm 400 is provided with an input of a camera-based scan of a brake pad which includes a volumetric representation of the brake pad in terms of 3D voxel grid of the brake pad. This 3D voxel grid will act as input for the machine learning algorithm 400. During an initial training period, the machine learning algorithm 400 may be trained on a plurality (e.g., several hundred) of models of different brake pads. The plurality of different input 3D voxel from the scan would be provided as input into the machine learning algorithm 400. As the machine learning algorithm 400 is trained on the initial data set, the machine learning algorithm 400 will learn the hierarchical features from the data on the brake pad. For example, the machine learning algorithm 400 may determine that particularly for a brake pad the following parameter are far more important than others in enabling the correct classification of the brake pad: Width of the brake pad; disc outer edge (OD) of the brake pad; disc inner edge (ID) of the brake pad; and the location of the notch features on the top of the brake pad. The machine learning algorithm 400 may further determine that the following parameter of the brake pad are less important in the identification of the brake pad: thickness of the brake pad (as the brake pad wears over a period of time); and marking on the edges of the brake (e.g., product branding or marking).

In another example, for a universal joint the machine learning algorithm 400 may determine that the following parameters are more important than others in enabling the correct classification of the universal joint: width from end to end; OD of the bearing cap. The machine learning algorithm 400 may determine that the following parameters of the universal joint are less important in the identification of the universal joint: whether it has a grease nipple or not; and marking on the edges of the universal joint (e.g., product branding or marking).

The machine learning algorithm 400 will learn features of the objects of the initial data set and adjust the weightings to reflect this above hierarchy depending on the product type and will start identifying the correct object more and more accurately over a period of time.

The users may in some examples be able to provide feedback to the machine learning algorithm 400 when it does not identify the object correctly thus enabling the machine learning algorithm 400 to learn and improve over time.

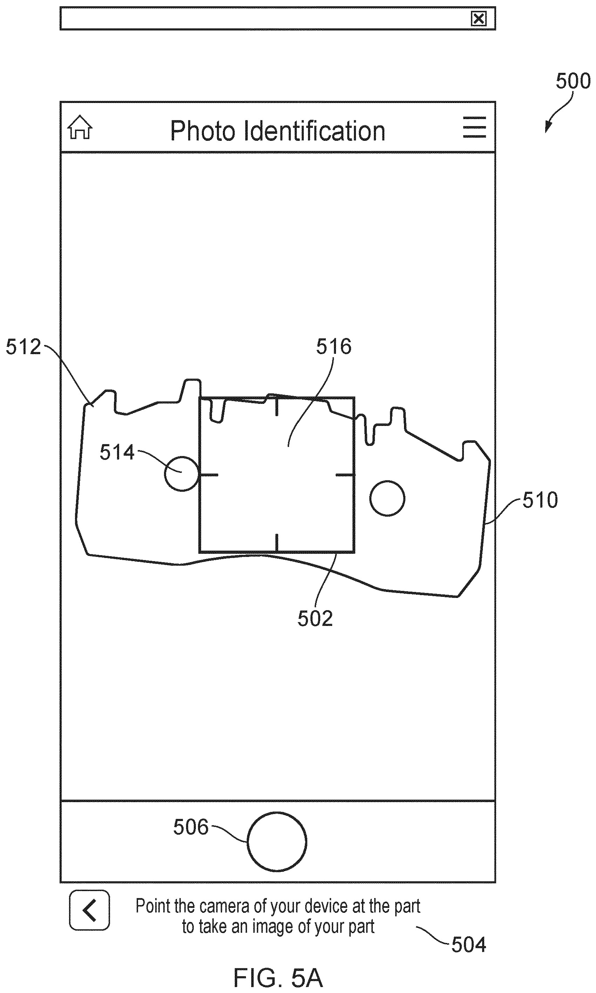

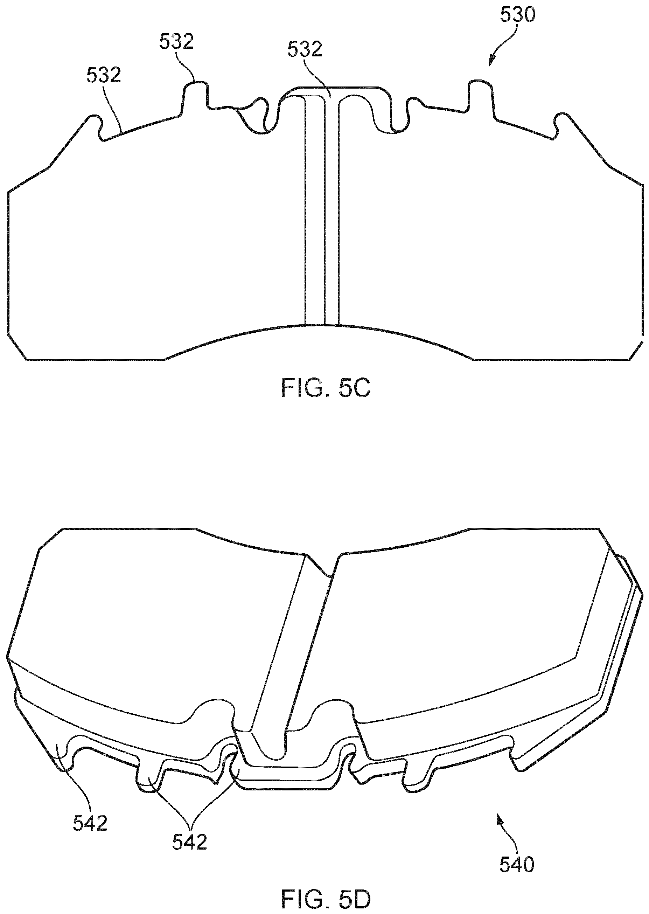

Figures 5A-5D show an example of use of the object identification application of the present invention. Figures 5A-5B illustrate example user interfaces which may be presented when the object identification application of the present invention is executed on a user's device, such as the electronic device 100 of Figure 1. Figure 5C shows a generated model of an object to be identified, and Figure 5D shows a reference model or image of a known object stored in a database which is determined as a candidate object for the imaged object. The illustrations shown in Figures 5A-5D are provided as an example of the use of the electronic device 100 or the control system 110 of Figure 1 or an example implementation of the methods 200, 300 of Figures 2 or 3, but it should be understood as illustrating an example only, and particularly the present invention may be implemented using different user interfaces or for identifying different types of objects to those shown.

Figure 5A illustrates a first user interface 500 according to an embodiment of the present invention. The first user interface 500 shows a graphical representation of an image of an object 510 and includes an instruction element 504 providing a user with instruction to capture an image of the object 510. The first user interface 500 also includes a capture button 506 which when pressed controls a camera to capture an image of the object 510.

In the example of Figure 5A, the image of the object 510 shows a number of object features, including a protrusion 512, a textured part 514 and a serial code 516. It should be understood that other features may be visible in an image of the object, and that the image of the object may further show wear or breakage. While the image of the object 510 in Figure 5A shows the object 510 in a plain background, it should be understood that the object 510 may be imaged in situ. The first user interface 500 may also include a focus element 502 indicating a particular part of the object 510 to capture.

In one example, image recognition may be used initially to identify a subcategory of objects to compare with before deploying a 3D scan comparison to narrow the search to the subcategory of objects in question. For example, an image recognition may be used to identify that an object is a brake pad and not a U joint and then candidate objects may be determined based on a 3D model comparison with a smaller set of reference 3D models (in this example, models of brake pads only) to identify one or more candidate objects corresponding to the scanned or imaged brake pad.

Although Figure 5A shows how a single image may be captured, it should be understood that for an object 510 to be identified, a plurality of images may be captured showing different views of the object 510.

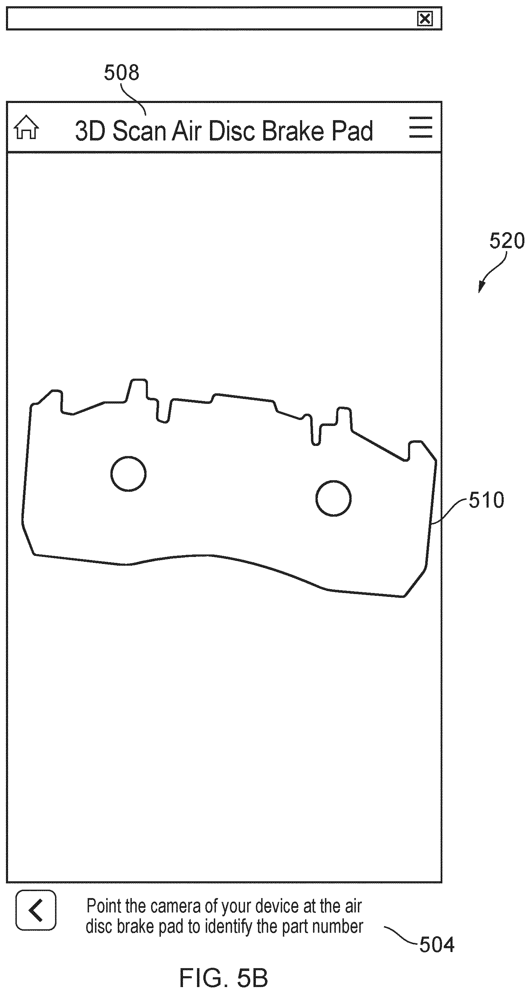

Figure 5B illustrates a second user interface 520 which also shows a user interface during capture of images or a 3D model of the object 510. In the second user interface 520, the type of the object 510 has been identified as an air disc brake pad. The type of the object 510 is indicated in a user interface element 508 and the instruction element 504 may be controlled to display a specific instruction associated with the type of the object 510, for example to capture a particular feature of the object type or to determine a size of the object 510 as discussed above.

In one example, the type of the object 510 may be determined by the control system 110 of the present invention, as has been discussed. In another example, the user may already know the type of the object 510, and may select the type of the object 510 in a menu of a previous screen of the user interface.

Figure 5C shows an example of a 3D model 530 of the imaged object 510 according to an embodiment of the invention. As discussed above, a plurality of images of the object 510 may be combined to form a 3D model 530 of the object. The 3D model 530 of the object may include object features 532 identified in the images of the object 510, such as notches, grooves, textures, protrusions and the like. The 3D model 530 of the object 510 may be a volumetric representation of the object to be identified. This representation could be in 3D Voxel grids or it could be in a set of 2D slices of the imaged object 510. Each discrete 3D voxel may contain information about the spatial structure of the object 510 to be identified.

Figure 5D illustrates an example of a reference image 540 of a known object which may be determined as a candidate object for the imaged object 510 of Figures 5A-5C, based on a comparison of the 3D model 530 of the object 510 to the reference image 540 of the known object. The reference image 540 may also take the form of a 3D model or a plurality of 2D slices, as discussed above.

The candidate object shown in Figure 5D may be determined as the candidate object using the methods described in Figures 1-4. In particular, the candidate object may be determined based on a comparison of the 3D model 530 of the object 510 with a plurality of reference images, and the candidate object determined as an object which potentially corresponds to the object 510 being imaged. This correspondence may be determined based on a similarity between the object 510 being imaged and a known object determined based on a comparison of the 3D model 530 of the object 510 and the reference image 540 of the known object. For example, similar object features 542 may be identified in the reference image 540 of the known object as in the 3D model 530 of the object 510 to be identified. It should be understood that this is merely an example, and that the similarity may be determined further based on other factors, as has been discussed.

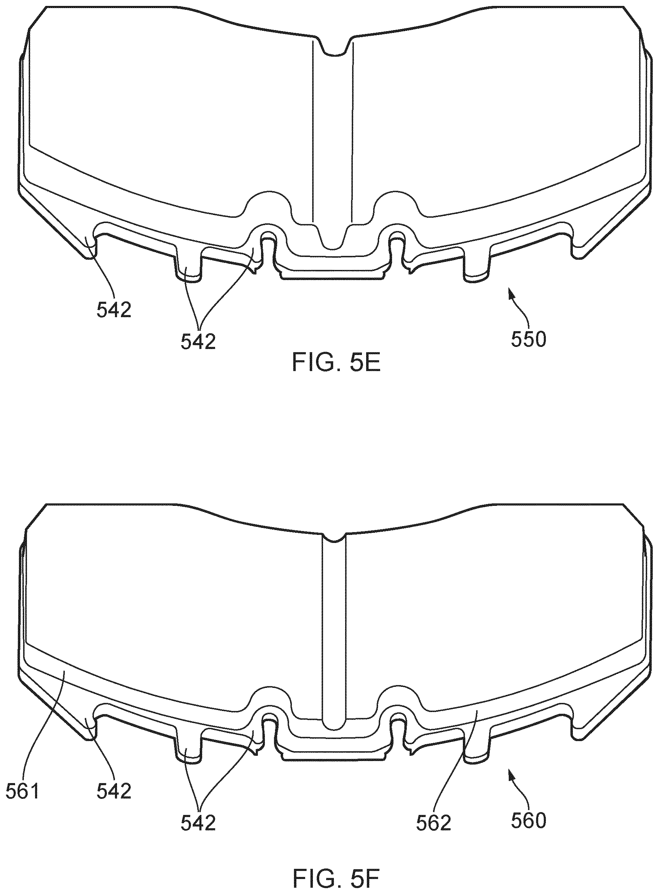

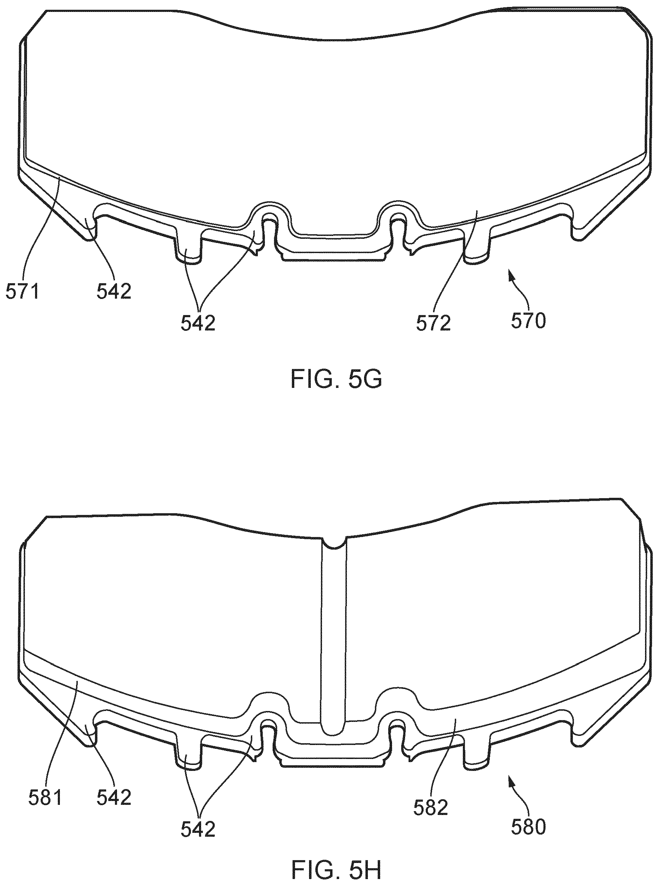

Figures 5E-5H illustrate further example reference images or reference 3D models of candidate objects which may be determined as candidate objects based on the comparison of the 3D model 530 of the object 510 to the reference images. The example models in Figures 5E-5H illustrate different levels of wear on a brake pad. In Figure 5E, the model 550 shows a new brake pad. In Figure 5F, the model 560 shows a partially worn brake pad. In particular, it can be seen that a thickness of the brake pad is reduced on both a first side 561 and a second side 562 of the brake pad when compared to the model 550 of Figure 5E. Figure 5G shows a model 570 of a significantly worn brake pad in which the brake pad has an even more reduced thickness at both a first side 571 and a second side 572 of the brake pad when compared to Figure 5F. Figure 5H shows a model 580 of a brake pad in which wear has developed unevenly. In the model 580 of Figure 5H, the brake pad has been worn by a greater degree on a first side 581 when compared to a second side 582 of the brake pad. As has been discussed, any number of reference images and/or reference 3D models may be included for a known object, which may show different wear or breakage conditions of the known object.

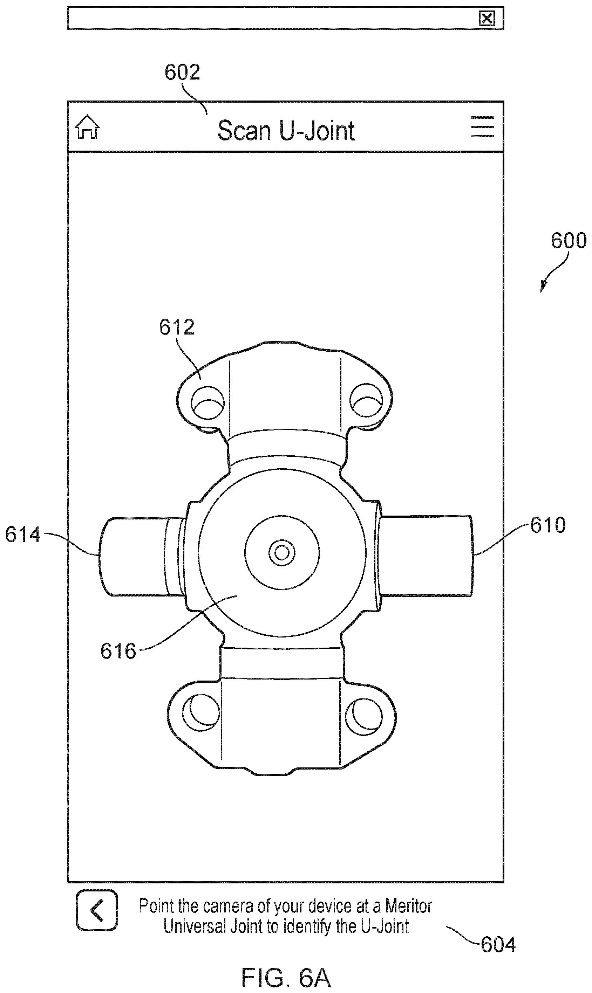

Figures 6A-6E illustrate another example use of the present invention. Figures 6A-6E illustrate example user interfaces which may be presented when the object identification application of the present invention is executed on a user's device, such as the electronic device 100 of Figure 1.

Figure 6A illustrates a first user interface 600 in which an image of an object 610 is shown. The object 610 of Figure 6A is exemplified as a U-Joint, and object features of the object 610 are visible including a U joint cross 616 and a U-Joint bearing cap 612, and a trunnion 614 of the U-Joint cross 616. The first user interface 600 also includes an indication 602 that the object type is known and includes a specific instruction element 604 instructing the user to capture images of the object 610 to begin the identification process.

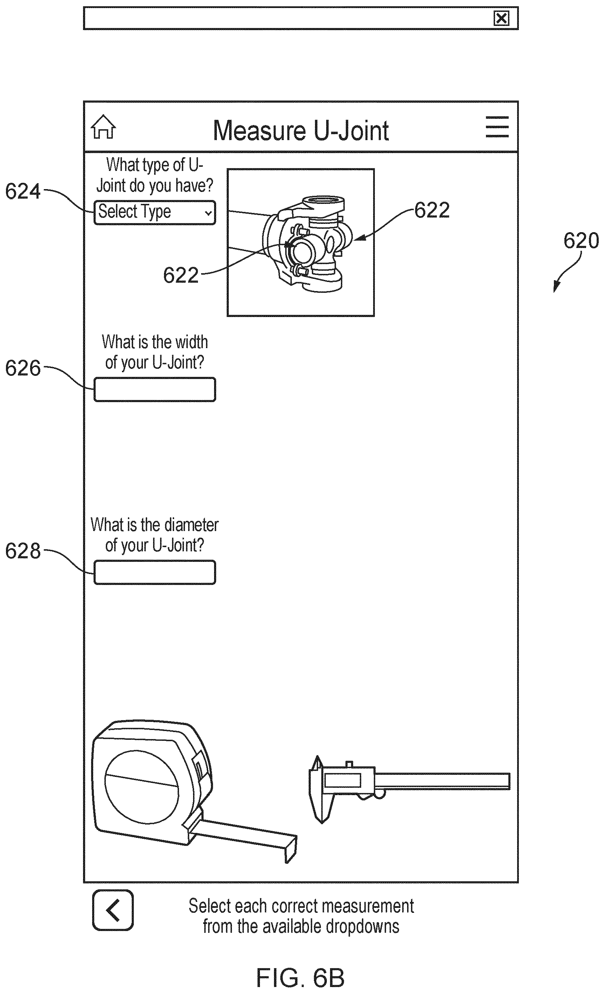

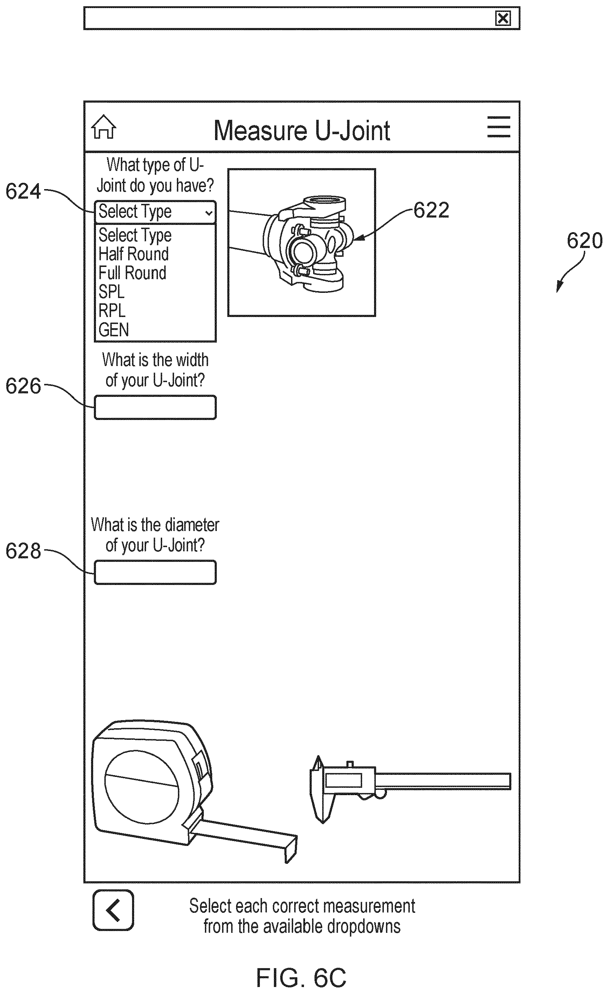

Figure 6B shows a second user interface 620 according to an embodiment of the invention. The second user interface 620 may be displayed before or after the display of the first user interface 600. In the example of Figure 6B, the second user interface 620 includes an object identifier element 622 which indicates a broad category of object type. The object type may be selected by the user or may be determined based on an image of the object 610. The second user interface 620 further includes an object sub-type menu element 624 which a user can interact with to refine the object type to a more specific sub-type. In the example shown in Figures 6B and 6C, the object sub-type menu element 624 is a drop-down menu, but it should be understood that other forms of user interface element may be used, such as a text entry box. Figure 6C illustrates how a drop-down menu may be used to select the object sub-type.

The second user interface 620 further comprises a first object size element 626 and a second object size element 628. The first object size element 626 and the second object size element 628 may be interactable and may be configured to receive a user input to respectively enter a first object size and a second object size. The first object size and the second object size refer to measurements of the size of the object 610 in different dimensions, such as width, height, thickness, diameter, and the like. The first object size element 626 and the second object size element 628 in some examples may refer to dimensions associated with a type of the object 610 or associated with a sub-type of the object 610 selected in the object sub-type menu element 624. The second user interface 620 in some examples may further comprise written or graphical instructions to assist the user in measuring the object 610 in the correct dimensions.

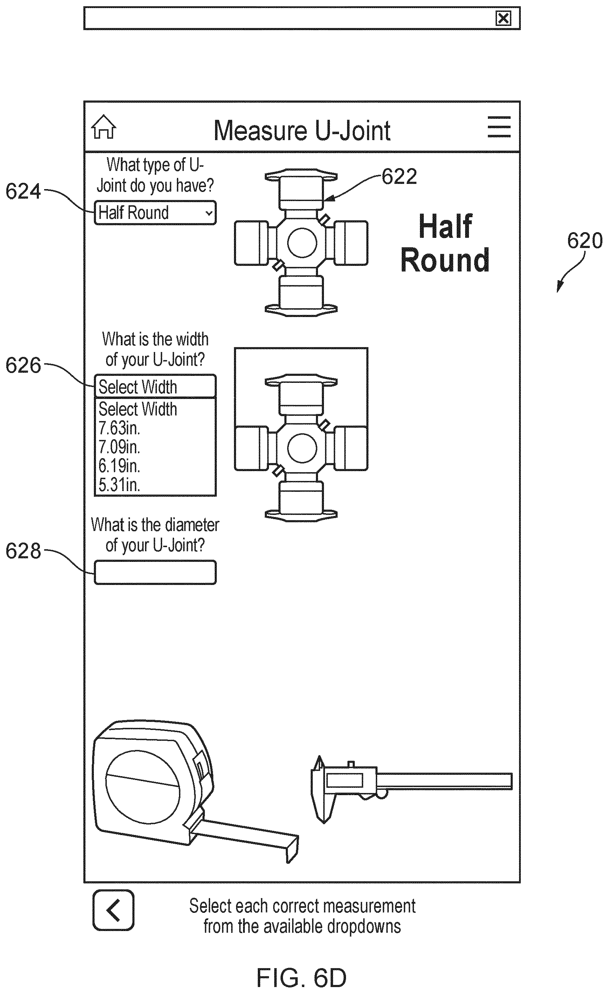

Figure 6D illustrates how the second user interface 620 may change as a user enters information regarding the object 610. In the example of Figure 6D, once the user has selected an object sub-type in the object sub-type menu element 624, the object identifier element 622 may change to correspond to the user's selection. The second user interface 620 may further change to display additional images or text to assist the user in measuring the size of the object 610 with reference to the specific sub-type of object 610 selected.

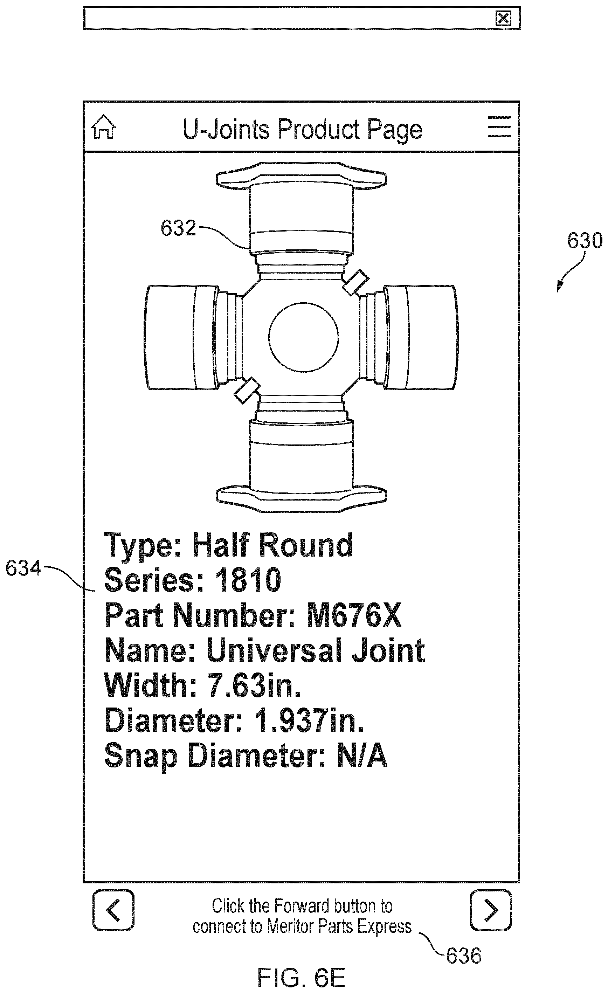

Figure 6E illustrates a third user interface 630 according to an embodiment of the present invention. The third user interface 630 is displayed after the display of the second user interface 620 and when one or more candidate objects 632 are determined based on the image of the object 610 and the object size. It should be understood that the one or more candidate objects 632 may be determined without using the object size and without displaying the second user interface 620, and may be directly based on using the comparison of the image of the object and a reference image of a known object, as has been described above.

The third user interface 630 of Figure 6E comprises an indication of the one or more candidate objects 632 and further comprises identifying information 634 of the one or more candidate objects 632 and a link 636 to purchase the one or more candidate objects 632. Although one candidate object 632 is illustrated in Figure 6E, it should be understood that a plurality of candidate objects may be displayed. For example, as has been discussed, candidate objects may be determined as known objects which have a similarity to the object 610 to be identified which exceeds a threshold. When multiple known objects exceed the similarity threshold, one or more may be determined as candidate objects based on criteria including a relative confidence metric indicative of whether one or more first candidate objects are more likely to correspond to the object 610 to be identified compared to one or more second candidate objects, filters of object type, size, features or the like.

The identifying information 634 may comprise information sufficient for the user to identify the candidate object, such as a product name, a model number, a size, or a serial number. The link 636 to purchase the candidate object may cause execution of a web browser or shopping application for purchasing the candidate object when selected.

The present invention described above with reference to the Figures provides apparatuses and methods for determining one or more candidate objects from a plurality of known objects as potential matches for an object to be identified using image analysis of images of the object and a plurality of reference images corresponding to the known objects at a plurality of conditions. By processing the plurality of reference images corresponding to the known objects at the plurality of conditions, the target object to be identified can be accurately identified even when wear, breakage or dirt cause the target object to appear differently to a new condition of the same object. Further, the process can be made more efficient and/or more accurate by determining the candidate objects using further information about the target object, including a size, type, or characteristic of the object to determine the candidate objects. The process can be further improved using manufacturer's knowledge of wear and/or breakage characteristics of the known objects, and/or expanding knowledge of the wear and breakage characteristics over time using a machine learning algorithm. In some further examples, the output of the machine learning algorithm determined based on the processing of images of objects can be used to inform design and manufacture processes, as common wear or breakage patterns can be identified and adjustments to the object design can be made to mitigate common wear or breakage of the specific object.

Where the word 'or' appears, this is to be construed to mean 'and/or'. This is such that items referred to are not necessarily mutually exclusive and may be used in any appropriate combination.

The invention has been described above with reference to one or more specific embodiments. However, the description is not exhaustive, and the present invention is not limited to the embodiments described. Various changes and modifications can be made without departing from the scope of the invention as defined in the claims. For example, the methods and devices described herein may further be configured to identify conditions of the imaged or scanned objects and to store information relating to the identified conditions of the objects. The stored information may include information such as a location, size, shape, direction and the like of one or more of wear or breakage of the object. This information may be used by the machine learning algorithm to further improve the determination of candidate objects in the future, and may advantageously be used to obtain continuous feedback to improve object design or maintenance. That is, the methods and devices described herein may obtain continuous feedback on how different objects perform in use, which otherwise may not be possible without significant efforts.

## Claims

1. A control system for determining one or more candidate objects, the control system comprising one or more processors collectively configured to:
receive one or more images of an object to be identified;
compare the one or more images of the object to a plurality of reference images corresponding to a plurality of known objects, the plurality of reference images comprising images of each of the known objects at a plurality of conditions;
determine, in dependence on a similarity between the object to be identified and at least one reference image of at least one known object, one or more candidate objects from the plurality of known objects as potential matches with the object to be identified; and
output an indication of the one or more candidate objects.

2. The control system of claim 1, wherein the object to be identified is a component for a vehicle and the plurality of known objects include a plurality of components for the vehicle.

3. The control system of any preceding claim, wherein the one or more processors are collectively configured to determine a type of the object and filter the plurality of reference images according to the determined type of the object.

4. The control system of any preceding claim, wherein the plurality of reference images comprise a plurality of 3D models and/or a plurality of 2D slices corresponding to the plurality of known objects, and wherein the one or more processors are collectively configured to:
obtain one or more of a 3D model of the object and a plurality of 2D slices of the object based on the received one or more images; and
compare the 3D model and/or the plurality of 2D slices to the plurality of reference images.

5. The control system of any preceding claim, wherein the one or more processors are collectively configured to determine a first known object as a candidate object based on a similarity of a condition of the object to be identified and a condition of the first known object shown in at least one reference image of the first known object.

6. The control system of any preceding claim, wherein the one or more processors are further configured to:
compare a condition of the object in the received images to one or more wear characteristics of the plurality of known objects in at least one reference image thereof, the one or more wear characteristics including one or more of a location of wear of the object, a direction of wear of the object, or a wear pattern; or
compare a condition of the object in the received images to one or more breakage characteristics of the plurality of known objects in at least one reference image thereof, the breakage characteristics including one or more of a location of a breakage of the object, a direction of a breakage of the object, or a breakage pattern.

7. The control system of claim 1, wherein the plurality of reference images comprises a first plurality of reference images corresponding to a first known object, the first plurality of reference images comprising images of the first known object with different wear and/or breakages, or wherein the first plurality of reference images comprises images of the first known object showing the first known object having one or more of different thicknesses, different breakages or different missing parts.

8. The control system of any preceding claim, wherein the received one or more images of the object comprise an image showing a condition of the object, wherein the condition of the object is indicative of one or more of: wear of the object and breakage of the object.

9. The control system of claim 1, wherein the one or more processors are collectively configured to:
output a user interface element to guide a user to determine a size of the object to be identified; and to determine the one or more candidate objects further based on the size of the object; or
determine a type of the object to be identified and to determine the size of the object based on a predetermined dimension associated with the object type.

10. The control system of any preceding claim, wherein the one or more processors are collectively configured to identify an object characteristic in the received one or more images of the object, and to determine the one or more candidate objects based on the object characteristic;
wherein the object characteristic comprises one or more of a brand identifier, a product identifier, a notch or a location of the object on a vehicle.

11. The control system of any preceding claim, wherein the one or more processors are configured to compare the received one or more images of the object to the plurality of reference images and determine the one or more candidate objects using a machine learning algorithm;
wherein the machine learning algorithm comprises a convolutional neural network configured to process images and to learn common object features in the database; and
wherein the machine learning algorithm is configured to adjust one or more weightings based on user feedback associated with the one or more candidate objects.

12. The control system of any preceding claim, wherein the indication of the one or more candidate objects comprises an identification of the one or more candidate objects and a confidence metric indicative of a confidence that the respective candidate object corresponds to the object to be identified.

13. An electronic device comprising the control system of any preceding claim and a camera configured to capture the one or more images of the object.

14. A server device comprising the control system of any of claims 1 to 12, wherein the server device is configured to receive the one or more images of the object from an electronic device and to transmit the indication of the one or more candidate objects to the electronic device.

15. A method for determining one or more candidate objects, the method comprising:
receiving one or more images of an object to be identified;
comparing the one or more images of the object to a plurality of reference images corresponding to a plurality of known objects, the plurality of reference images comprising images of each of the known objects at a plurality of conditions;
determining, in dependence on a similarity between the object to be identified and at least one reference image of at least one known object, one or more candidate objects from the plurality of known objects as potential matches with the object to be identified; and
outputting an indication of the one or more candidate objects.
